## Europäisches Patentamt

## European Patent Office

## Office européen des brevets

(11) Publication number: **0 173 814**
**B1**

(12) **EUROPEAN PATENT SPECIFICATION**

(45) Date of publication of patent specification: **27.12.89**

(51) Int. Cl.⁴: **F 16 D 3/72, F 16 D 3/79**

(21) Application number: **85108124.0**

(22) Date of filing: **01.07.85**

(54) **Metal flexing coupling.**

(30) Priority: **27.08.84 US 644867**

(43) Date of publication of application:
**12.03.86 Bulletin 86/11**

(45) Publication of the grant of the patent:
**27.12.89 Bulletin 89/52**

(84) Designated Contracting States:
**BE DE FR GB IT LU NL SE**

(56) References cited:
**EP-A-0 037 359**
**FR-A-2 327 443**
**US-A-2 182 711**
**US-A-2 435 058**
**US-A-4 416 645**

**ENGINEERING MATERIALS AND DESIGN, vol.
22, no. 4, April 1978, pages 52-56, I.P.C.
Industrial Press Ltd., London, GB; "Design
evaluation"**

(73) Proprietor: **RELIANCE ELECTRIC COMPANY**
**Box 499**
**Greenville South Carolina (US)**

(72) Inventor: **Marsh, Steven Craig**
**49 Orchard Park Drive Apt. No. 3**
**Greenville South Carolina (US)**

(74) Representative: **Patentanwälte Müller-Boré,
Deufel, Schön, Hertel, Lewald, Otto
Postfach 26 02 47 Isartorplatz 6
D-8000 München 26 (DE)**

## Description

### Background of the invention

All-metal flexible couplings are often used, given the right conditions, for connecting two rotatable shafts in end-to-end relationship and for transmitting the torque developed by the driving shaft to the driven shaft. This general type of coupling normally employs one or more thin metal discs, often fastened together into a laminated disc-pack, as the flexible element or elements. The discs or disc-packs flex to accommodate end float of the connected shafts and parallel and/or angular misalignment, the amount of misalignment manageable normally being limited to approximately two degrees, due to the construction of the couplings and the metallic composition of the flexible element. While, ideally, the shafts will be in perfect alignment, such a condition is difficult to obtain and even more difficult to maintain during operation. However, the alignment must be relatively precise, due to the limited reserve capability of the all-metal couplings.

Despite the limited flexibility, all-metal couplings have other advantages not found in other types of flexible couplings. The metallic construction normally ensures durability and a long service life, both from the intrinsic strength of the metallic components and the resistance to corrosion, heat, or other conditions and forces which are detrimental to couplings having flexible elements of rubber. Thus, the all-metal couplings are especially suited for use in hostile or corrosive environments, where extremes of temperature are present, or where access to the coupling is limited. Such couplings also require no lubrication, in contrast, to the normally lubricated gear-type flexible couplings. Should failure of the disc-pack occur, the coupling should allow for servicing without removing the coupling hubs or flanges. If the entire unit must be disengaged from the shafts, the shaft alignment procedure must be carefully redone to ensure that the removal and subsequent replacement of the coupling have not skewed the alignment.

A number of differnt types of all-metal couplings are currently available. The differences between couplings are normally manifested in the bolting patterns used to connect the coupling halves, the type, shape, and material composition of the flexible discs, and the ability or lack of same to either increase or decrease the length of the coupling so that the same coupling unit can accommodate installations where the distance between the shaft ends may vary from one installation to another.

### Summary of the invention

It is, therefore, one of the principal objects of the present invention to provide a metal flexing coupling which can couple and transmit torque from a driving shaft to a driven shaft, accommodating angular and/or parallel misalignment or end float within certain parameters.

Another object of the present invention is to provide a metal flexing coupling which can accommodate different distances between the opposed shaft ends using reversible coupling hubs, and which uses standard fasteners that permit a larger maximum bore in the coupling hubs.

A further object of the present invention is to provide a metal flexing coupling that is easily serviced without removing the coupling hubs, and which is strong and durable, providing effective torque transmission throughout a long service life.

A still further object of the present invention is to use an alternating bolting pattern, thereby providing more efficient power transmission, and to provide a coupling which is serviceable without requiring specialized tools, training, or experience.

These and other objects are attained by the present invention, which relates to:

A metal flexing coupling for connecting driving and driven shafts in end-to-end relationship, said coupling comprising first and second coupling hubs, provided with flanges having a plurality of spaced holes first and second flexible elements disposed between said hubs, an annular center member disposed between said flexible elements and first and second groups of fasteners for connecting said flanges to respective flexible elements and for connecting respective flexible members to said center member, one-half of the holes in the first flange have a large diameter and the other one-half of the holes have a small diameter and alternating with said large diameter holes, said second flange having an identical arrangement of holes, the small diameter holes in said second flange being staggered relative to the small diameter holes in said first flange, said first group of fasteners having heads thereon and being disposed in said small diameter holes, for securing said flexible elements to said respective hubs, said small diameter holes being smaller than said heads of said first group of fasteners, said second group of fasteners having heads thereon disposed in said large diameter holes, said large diameter holes being larger than said heads of said second group of fasteners.

Such a coupling is shown and described in EP—A—82 797. To attain the above object the invention is characterized in that said flange is secured to said flexible element by one set of said first group of fasteners and said flexible element is secured to one side of said center member which is disk-shaped by one set of said second group of fasteners passing through one set of spacing members, and the other side of said center member is secured to said flexible element by another set of said second group of fasteners passing through another set of spacing members, and said flexible element is secured to said flange by another set of said first group of fasteners.

A coupling having a disk-shaped center member has been disclosed in US—A—2 182 711 or US—A—2 435 058 however, contrary to the invention, disclosing an arrangement wherein the small diameter holes in the first and the second flange are not staggered relatively to each other.

According to the invention the large diameter holes are larger than the heads of the fastening means, such that the heads are captured within the holes but do not contact the side thereof, thereby allowing the coupling to flex for accommodating misaligned shafts or shafts exhibiting end float. The present coupling may be adjusted to accommodate a range of relative distances between the opposed shaft ends, the modification including reversible hubs or an annular spacer of sufficient length disposed between the hubs.

Various other objects and advantages of the present metal flexing coupling will become apparent from the following description, with reference to the accompanying drawings.

Brief description of the drawings

Figure 1 is a side elevational view of the metal flexing coupling embodying the present invention, shown here with the long bodies of both coupling hubs projecting outwardly from the center of the coupling;

Figure 2 is an end elevational view of the metal flexing coupling, showing the alternating bolting pattern;

Figure 3 is a cross-sectional view of the metal flexing coupling, here showing the long bodies of both hubs projecting inwardly, the section being taken on line 3-3 of Figure 2;

Figure 4 is a partial, cross-sectional view of the present metal flexing coupling, here showing the long body of one hub projecting inwardly and the other projecting outwardly;

Figure 5 is a partial, cross-sectional view of the present coupling, showing the long bodies of both hubs projecting outwardly;

Figure 6 is a partial, cross-sectional view of the present coupling with the long bodies of both hubs projecting outwardly and a spacer inserted therebetween;

Figure 7 is a side elevational view of the laminated disc-pack used as the flexible element in the present coupling; and

Figure 8 is a cross-sectional view of the disc-pack shown in the preceding figure, the section being taken on line 8—8 of Figure 7.

Detailed description of the preferred embodiment

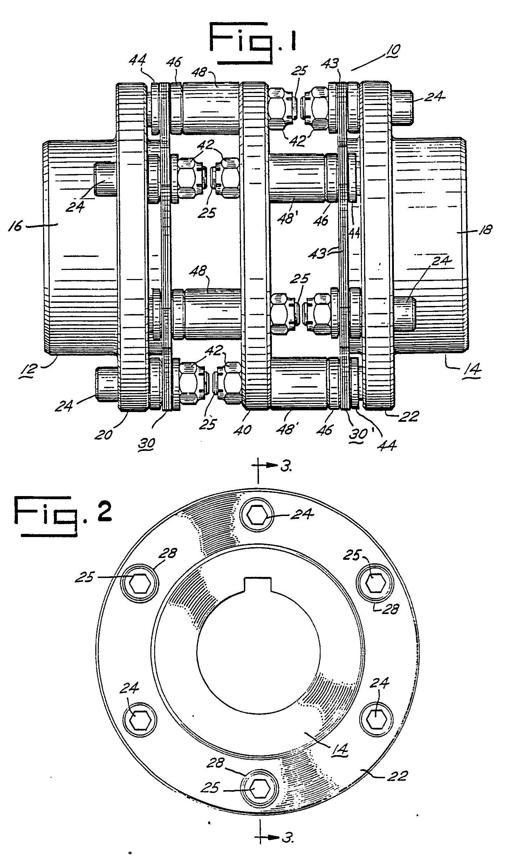

Referring more specifically to the drawings, and to Figure 1 in particular, numeral 10 designates generally a metal flexing coupling embodying the present invention. The coupling 10 is shown here apart from its installed position and may be used to couple a driving shaft to a driven shaft, or to couple one driven shaft to another in a power transmission system. The coupling includes a pair of coupling hubs 12 and 14 for mounting on the opposed ends of the shafts (not shown) in a conventional manner, each hub having a central bore therethrough, body portions 16 and 18, respectively, and annular flanges 20 and 22, respectively, the flanges projecting radially from the outer circumferential surfaces of the body portions near one end thereof. The present coupling uses a six-bolt, alternating pattern for securing the coupling halves together, and each flange has six regularly spaced holes therethrough. The fastening means are standard, socket-head cap screws or bolts, including relatively short bolts 24 and comparatively longer bolts 25, all having the same diameter. This type of fastener is used due to the relatively compact heads which take up less hub space and have higher strength than a conventionally headed bolt, permitting the hubs to have a larger central bore. This gives the coupling a higher torque rating, allows use of the hubs on a greater number of shafts than if the bores were smaller, and also substantially reduces the weight of the coupling, thereby easing the strain on the shaft support bearings. In addition, the standard fasteners are much less expensive and more convenient to use than the ground body bolts commonly used with other all-metal couplings, the body bolts being ground to the exact size of the mounting hole.

As noted above, the bolts 24 and 25 are alternating in application. As seen in Figures 2 and 3, flange holes 26 are smaller than the heads on the cap screws, while flange holes 28 are slightly larger than the cap screw heads. The shorter bolts 24 are inserted through holes 26 in the flanges and used to secure the flexible element or laminated disc-pack 30 in relatively close proximity to the respective hub flange. The longer bolts 25 are inserted through holes 28 in the flanges, through a corresponding hole in the flexible element, and then through a corresponding hole formed in an annular center ring member 40. When the coupling is assembled, the smaller holes 26 in one flange are disposed directly opposite the larger holes 28 in the opposing flange. This arrangement is followed in all the embodiments described herein, except for the embodiment using the spacer shown in Figure 6 which requires only the shorter bolts. The spacer embodiment will be described separately hereinbelow. Both short and long bolts are secured with standard self-locking nuts 42. When fully secured, the heads of the bolts in the larger holes 28 are captured within the hole, but are allowed to float, that is, they do not contact the inner surface of the holes, as shown in Figures 3 through 5. The floating heads permit the flexible elements secured to the center ring by the bolts 25 to flex as the relationship between the opposed shafts changes.

The alternating securing arrangement just described allows the present coupling to flex for accommodating misaligned or floating shafts. The hubs 12 and 14 are not directly connected to the center ring 40, but rather are connected only indirectly through the flexible elements 30. Thus, for the coupling shown in Figure 1, with hub 12 being secured to the driving shaft, torque is transmitted from the shaft and hub 12 to the proximal flexible element, from there to the center ring 40, from the center ring to the distal flexible element, and from there to the driven shaft and hub 14. The provision of two flexible elements permits the coupling to accommodate both parallel and/or angular misalignment of the connected shafts. Where angular misalignment is the only possible misaligned condition, one flexible element may be used, and the center ring may be eliminated.

The six bolt, alternating pattern provides additional advantages during operation of the connected machinery. Three of the six bolts are used to secure the flexible element to the center ring. Using Figure 7 as an example, the shorter bolts 24 used to secure the flexible element to the hub are disposed through the holes designated by the letter A, while the other, longer bolts 25 are disposed through the holes designated by the letter B. The links between the A position in the upper left corner and the B position directly below A in the lower left corner are designated by the letter C, and the links from the lower left B position to the A position at the bottom of the figure are designated by the latter D, and so on around the discs. For clockwise rotation, as viewed in Figure 7, links C are in tension and are the driving links, while links D are in compression, being driven links. The function of the links would be reversed for rotation in the opposite direction. In addition, the tension links C in one of the elements are disposed directly opposite the compression links D in the opposing element due to the opposite disposition of the large and small diameter holes in the flanges. This staggered arrangement provides an essentially continuous circumferential drive in the present coupling, while maintaining flexibility in each side. Thus, there are three driving or tension links per flexible element, oppositely disposed across the coupling, this being the most efficient arrangement for strength and effective torque transmission. The staggered arrangement across the present coupling also maximizes the flexibility of the coupling unit as a whole, in contrast to many prior art couplings which have the tension links on one side disposed across from the tension links on the other side, and in which the flexible elements are secured directly together through a center member. Most couplings of this type use a four, six, or eight bolt pattern, although ten and twelve are also used. With four bolts, the element or discpack can handle less torque, having only two driving or tension links. A regularly spaced eight bolt pattern forms a stronger element in terms of torque transmission, having four tension links, but has substantially reduced flexibility.

The material composition and shape of the individual discs 43 also contribute to the effectiveness of the present coupling. The discs are composed of stainless steel, which has superior resistance to corrosion and to fretting, and are shaped to maximize strength and flexibility. The portions of the discs which receive the bolts, designated as A and B in Figure 7, are fully formed for strength in the holding area, while the linking portions, designated by C and D in Figure 7, are tapered with the outer edges having a generally concave shape for greater flexibility. Additional strength is gained from the reinforcement and support provided by the adjacent discs in the laminated elements 30. This strength allows a large enough central bore in the laminated disc-packs to receive the body portions of the hubs. The hubs can thus be mounted with the body portions projecting laterally in either direction to accommodate a range of relative distances between the shaft ends. The flexible elements can be mounted over the body portions in relatively close proximity to the respective flange due to the large central bore in the elements, and also removed therefrom without disturbing the mounted hubs.

The discs 43 of the flexible element 30 or laminated disc-pack are held together as a unit by bushings 44 and washers 46. The bushings 44 have a flanged end which abuts the flexible element, and the washers are secured around the opposite end of the bushing. The bushings and washers are held together, for example, by swaging, and the bushings are tightly fitted within the mounting holes in the discs. Many prior couplings merely have bolts inserted directly through the laminated discs, making assembly difficult. The outer edges of the bushings and washers are chamfered, except for those which contact either the head of the cap screws 24 and 25 or the nuts 42, where chamfering is not required due to the smaller diameters of the screw heads and nuts compared with the diameters of the bushings or washers, which thereby have reduced areas of contact with the bushing or washer. The chamfering of those edges where full facial contact would otherwise be made between the bushings or washers and the flanges, flexible discs, or cylindrical spacing sleeves 48, ensures that bending stresses in the disc-packs as flexing occurs will be minimized. The number of individual discs 43 may be varied as necessary for a particular installation or application and, in general, more discs are added as coupling size increases. For example, a twelve inch coupling may have as many as nineteen discs in a disc-pack.

The unitary construction of the disc-packs provides for ease of servicing should the element fail, or if an element exhibiting different characteristics is required. Servicing is accomplished without removing the coupling hubs, thereby minimizing down time of the machinery and helping to preserve the aligned condition of the shafts, making the normal re-alignment or alignment-checking procedures after servicing simpler and quicker. The center ring 40 is not bolted to either hub directly, thus, it can be easily slipped out of its installed position by removing the bolts 25 which secure the ring to the flexible elements. With the center ring removed, the cylindrical sleeves 48, which are merely slipped over the center ring securing bolts to serve as spacers, thereby assuring sufficient clearance between the center ring and the hubs to permit flexing, can also be removed without disturbing the coupling hubs. The flexible element securing bolts 24 can then be removed and the element replaced, whereupon the bolts, sleeves, and center ring are replaced in a reversal of the dismantling steps outlined above. In addition, the unitary construction of the disc-packs minimizes the number of loose pieces, thereby facilitating servicing of the couplings.

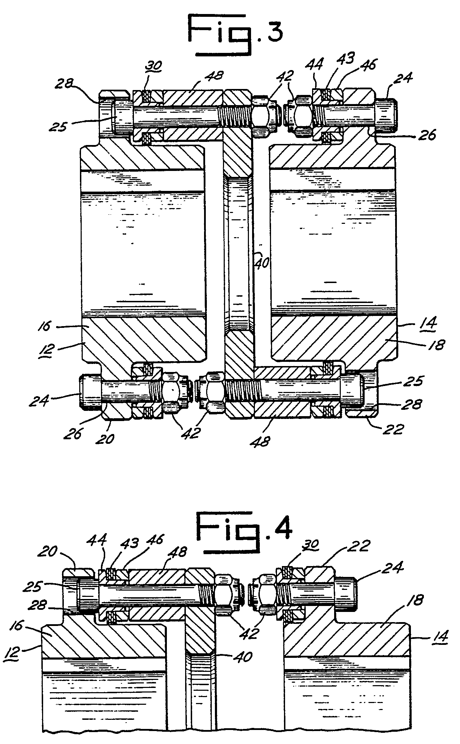

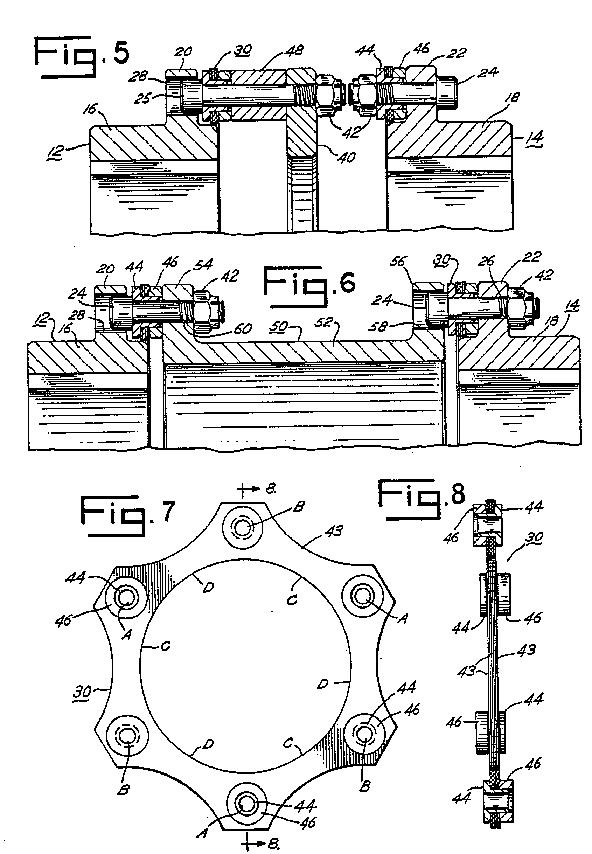

The coupling hubs 12 and 14 are universal-type hubs and are reversible, i.e. the hubs can be mounted on the shafts with the respective body portions 16 and 18 projecting inwardly or outwardly. This permits the present metal flexing coupling to accommodate different distances between the opposed shaft ends. For example, Figures 1 and 5 illustrate an arrangement with relatively wide spacing between the shaft ends; thus, both long body portions of the hubs are projecting outwardly. Figure 3 illustrates a close-coupled arrangement where the shaft ends are relatively close together; thus, the long body portions project inwardly. Either of the hubs may be reversed for intermediate spacing as illustrated in Figure 4.

Even greater distances between the opposed shaft ends may be accommodated by the spacer coupling embodiment shown in Figure 6. Here, the functions of the center ring 40 and the sleeves 48 are taken over by a spacer 50 having a body portion 52 for bridging the distance between the shaft ends, and annular radially extending flanges 54 and 56 for the left and right sides, respectively, as viewed in Figure 6. In this embodiment, spacers of various lengths may be used, depending on the partiuclar installation, and, since the distance between the shaft ends is covered by the spacer, both coupling hubs 12 and 14 have their long body portions projecting outwardly. The flanges 54 and 56 have both wide and narrow gauge holes disposed therethrough, the wide spacer holes 58 for accepting the heads of the cap screws 24 and being disposed opposite a narrow gauge hole 26 in the hub flange, and the narrower spacer holes 60 being disposed opposite a wider hole 28 in the hub flange. Only the shorter bolts 24 are needed in securing the spacer embodiment, due to the relative proximity of the hub and spacer flanges, and all six of the heads of the cap screws or bolts on both sides of the coupling are captured within the wider gauge holes 28 or 58 to allow the coupling to flex. This modification also uses the six bolt alternating pattern with the narrower diameter holes in one flange being disposed opposite the wider diameter holes in the opposing flange, and the spacer and the flexible elements can be easily removed and reinserted without disturbing the coupling hubs. This arrangement also provides three tension links and three compression links in the flexible elements on both sides of the coupling to maximize torque transmission capability and flexibility of the elements.

In the use and operation of the present metal flexing coupling, suitable coupling hubs, such as hubs 12 and 14, are mounted on the opposed ends of the shafts to be coupled. The hubs are reversible to accommodate different distances between the shaft ends and may be close-coupled, with body portions of both hubs projecting inwardly, or adjusted relative to the distance to be covered by reversing one or both of the hubs or by using a spacer 50 of suitable length. The hubs have a relatively large maximum bore, due to the use of socket-head cap screws or bolts 24 and 25, permitting their use with a greater range of shaft sizes without requiring a larger coupling. The hubs may be secured to the shafts in any conventional manner, such as with a key and corresponding keyway and set screws. The unitized flexible elements or laminated disc-packs 30 are then secured in relatively close proximity to the radially extending flanges 20 and 22 of the respective hubs. The coupling uses a six bolt alternating pattern, the bolts being standard socket-head bolts 24 and 25, as opposed to ground body bolts. Three of the bolts 24 are used in alternating, relatively narrow holes to secure the flexible elements to the flanges. The other three longer bolts 25 are used in the remaining alternating, larger holes to secure the flexible element to the center ring 40, with spacer sleeves 48 disposed around the bolts between the flexible element and the center ring. The spacer coupling embodiment requires the shorter bolts 24 only, as the flanges of the hubs and the flanges of the spacers are in relatively close proximity. The bolting pattern alternates to provide three driving or tension links and three compression links in each flexible element, and the torque developed by the driving shaft is transmitted through the respective hub to the proximal flexible element. From there, the torque is transmitted to the center ring or the spacer 50, then to the distal flexible element, and finally to the driven hub and shaft opposite the driving shaft. The six bolt alternating pattern maximizes torque transmission capability and misalignment handling capability while minimizing the number of bolts and other pieces needed to secure the coupling together. In addition, the center ring 40, spacer 50, cylindrical sleeves 48, and the disc-packs 30 can all be removed and replaced, if necessary, without disturbing the mounted coupling hubs, thereby facilitating service in the field and minimizing down time for repairs or maintenance.

**Claims**

1. A metal flexing coupling for connecting driving and driven shafts in end-to-end relationship, said coupling comprising first and second coupling hubs (12, 14), provided with flanges (20, 22, respectively) having a plurality of spaced holes (26, 28), first and second flexible elements (30, 30') disposed between said hubs, an annular center member (40) disposed between said flexible elements (30, 30') and first and second groups of fasteners for connecting said flanges to respective flexible elements and for connecting respective flexible members to said center member, one-half of the holes (28) in the first flange (20) have a large diameter and the other one-half of the holes (26) have a small diameter and alternating with said large diameter holes (28), said second flange (22) having an identical arrangement of holes, the small diameter holes (26) in said second flange being staggered relative to the small diameter holes (26) in said first flange, said first group of fasteners (24) having heads thereon and being disposed in said small diameter holes (26), for securing said flexible elements (30) to said respective hubs (12, 14), said small diameter holes (26) being smaller than said heads of said first group of fasteners (24), said second group of fasteners (25) having heads thereon disposed in said large diameter holes (28), said large diameter holes being larger than said heads of said second group of fasteners (25), characterized in that said flange (20) is secured to said flexible element (30) by one set of said first group of fasteners (24) and said flexible element (30) is secured to one side of said center member (40) which is disk-shaped by one set of said second group of fasteners (25) passing through one set of spacing members (48), and the other side of said center member (40) is secured to said flexible element (30') by another set of said second group of fasteners (25) passing through another set of spacing members (48'), and said flexible element (30') is secured to said flange (22) by another set of said first group of fasteners (24).

2. A metal flexing coupling as defined in Claim 1, characterized in that said first and second coupling hubs (12, 14) are reversible for mounting said hubs on shafts with body portions (16, 18) projecting laterally in either dierction, for varying the distance between said body portions.

3. A metal flexing coupling as defined in Claims 1—2, characterized in that said flexible elements (30) include a plurality of thin metallic discs (43), each having a central bore therethrough with a diameter greater than that of said body portions (16, 18), and securing members (44, 46) retaining said discs in side-by-side relationship.

4. A metal flexing coupling as defined in Claim 3, characterized in that said discs (43) further include a plurality of equally spaced bores therethrough, corresponding to said holes in said flanges (20, 22), and said discs have concave outer edges (C, D) between said spaced bores.

5. A metal flexing coupling as defined in Claim 1, characterized in that said spacing members (48) are in the form of cylindrical sleeve members for retaining said center member (40) in spaced relation relative to said hubs (12, 14).

6. A metal flexing coupling as defined in Claim 5, characterized in that said coupling hubs (12, 14) are reversible for mounting said hubs on shafts with body portions (16, 18) projecting laterally in either direction, for varying the distance between said body portions.

**Patentansprüche**

1. Flexible Metallkupplung zur Verbindung von antreibenden und angetriebenen Wellen in endseitigem Verhältnis zueinander, wobei diese Kupplung erste und zweite Kupplungsnaben (12, 14) umfaßt, die jeweils mit Flanschen (20 bzw. 22) versehen sind, die eine Vielzahl unter Abstand angeordneter Löcher (26, 28) haben, ersten und zweiten flexiblen Elementen (30, 30'), die zwischen diesen Naben angeordnet sind, einem ringförmigen Mittelelement (40), das zwischen diesen flexiblen Elementen (30, 30') angeordnet ist und ersten und zweiten Gruppen von Befestigungselementen, zur Verbindung dieser Flansche mit jeweiligen flexiblen Elementen und zur Verbindung jeweiliger flexibler Elemente mit diesem Mittelelement, wobei eine Hälfte der Löcher (28) in dem ersten Flansch (20) über einen großen Durchmesser verfügt und die andere Hälfte der Löcher (26) über einen kleinen Durchmesser verfügt und mit den Löchern (28) großen Durchmessers abwechselt, wobei dieser zweite Flansch (22) eine identische Anordnung von Löchern hat, die Löcher (26) kleinen Durchmessers in diesem zweiten Flansch relativ zu den Löchern kleinen Durchmessers (26) in diesem ersten Flansch versetzt sind, diese erste Gruppe von Befestigungselementen (24) Köpfe hierauf hat und in diesen Löchern kleinen Durchmessers (26) angeordnet sind, um diese flexiblen Elemente (30) an die jeweiligen Naben (12, 14) zu befestigen, wobei diese Löcher (26) kleinen Durchmessers kleiner als diese Köpfe dieser ersten Gruppe von Befestigungselementen (24) sind, wobei diese zweite Gruppe von Befestigungselementen (25) Köpfe hierauf hat, die in diesen Löchern (28) größen Durchmessers angeordnet sind, wobei diese Löcher großen Durchmessers größer als die Köfpe dieser zweiten Gruppe von Befestigungselementen (25) sind, dadurch gekennzeichnet, daß dieser Flansch (20) an diesem flexiblen Element (30) durch einen ersten Satz dieser ersten Gruppe von Befestigungselementen (24) befestigt ist und dieses flexible Element (30) gegen eine Seite dieses Mittelelementes (40), das scheibenartig ausgebildet ist, durch einen Satz dieser zweiten Gruppe von Befestigungselementen (25) befestigt ist, welche durch einen Satz dieser Distanzelemente (48) geht und die andere Seite dieses Mittelelements (40) an diesem flexiblen Element (30') durch einen anderen Satz dieser zweiten Gruppe von Befestigungselementen (25) befestigt ist, die durch einen anderen Satz von Distanzelementen (48') geht und dieses flexible Element (30') an diesem Flansch (22) durch einen anderen Satz dieser ersten Gruppe von Befestigungselementen (24) befestigt ist.

2. Flexible Metallkupplung nach Anspruch 1, dadurch gekennzeichnet, daß diese ersten und zweiten Kupplungsnaben (12, 14) reversibel sind, um diese Naben auf Wellen zu lagern, wobei Körperteile (16, 18) seitlich in jeder Richtung vorstehen, um den Abstand zwischen den Körperteilen zu variieren.

3. Flexible Metallkupplung nach den Ansprüchen 1—2, dadurch gekennzeichnet, daß diese flexiblen Elemente (30) eine Vielzahl dünner metallischer Scheiben (43) umfassen, von denen eine jede eine mittige durchgehende Bohrung mit einem Durchmesser größer als dem dieser Körperteile (16, 18) hat und Sicherungs- bzw. Befestigungselemente (44, 46) diese Scheiben seitlich nebeneinander halten.

4. Flexible Metallkupplung nach Anspruch 3, dadurch gekennzeichnet, daß diese Scheiben (43) weiterhin eine Vielzahl von durchgehenden unter gleichem Abstand zueinander stehenden Bohrungen umfassen, die diesen Löchern in diesen Flanschen (20, 22) entsprechen und diese Scheiben konkave äussere Ränder (C, D) zwischen diesen unter Abstand befindlichen Bohrungen haben.

5. Flexible Metallkupplung nach Anspruch 1, dadurch gekennzeichnet, daß diese Distanzelemente (48) in Form zylindrischer Hülsenelemente vorgesehen sind, um dieses Mittelelement (40) in Abstandsbeziehung relativ zu diesen Naben (12, 14) zu halten.

6. Flexible Metallkupplung, wie in Anspruch 5 definiert, dadurch gekennzeichnet, daß diese Kupplungsnaben (12, 14) reversibel sind, um diese Naben auf Wellen aufzubringen, wobei Körperteile (16, 18) seitlich in jeder Richtung vorstehen, um die Entfernung zwischen diesen Körperteilen zu variieren.

**Revendications**

1. Accouplement flexible métallique pour accoupler un arbre d'entraînement et un arbre entraîné en relation bout à bout, ledit accouplement comprenant un premier et un deuxième manchons d'accouplement (12, 14) pourvus de brides (20, 22, respectivement) comportant une pluralité de trous espacés (26, 28), un premier et un deuxième éléments flexibles (30, 30') disposés entre lesdits manchons d'accouplement, un élément central annulaire (40) diposé entre lesdits éléments flexibles (30, 30') et un premier et un deuxième groupes de fixations pour connecter lesdites brides aux éléments flexibles respectifs et pour connecter les éléments flexibles respectifs audit élément central, une moitié des trous (28) de la première bride (20) ayant un grand diamètre et l'autre moitié des trous (26) ayant un petit diamètre et alternant avec lesdits trous de grand diamètre (28), ladite deuxième bride (22) comportant un agencement identique de trous, les trous de petit diamètre (26) dans ladite deuxième bride étant quinconcés par rapport aux trous de petit diamètre (26) de ladite première bride, ledit premier groupe de fixations (24) comportant des têtes et étant disposées dans lesdits trous de petit diamètre (26), pour fixer lesdits éléments flexibles (30) auxdits manchons d'accouplement respectifs (12, 14), lesdits trous de petit diamètre (26) étant plus petits que lesdites têtes dudit premier groupe de fixations (24), ledit deuxième groupe de fixations (25) comportant des têtes disposées dans lesdits trous de grand diamètre (28), lesdits trous de grand diamètre étant plus grands que lesdites têtes dudit deuxième groupe de fixations (25), caractérisé en ce que ladite bride (20) est fixée audit élément flexible (30) par un ensemble dudit premier groupe de fixations (24) et ledit élément flexible (30) est fixé à un côté dudit élément central (40), qui est en forme de disque, par un ensemble dudit deuxième groupe de fixations (25) traversant un ensemble de pièces d'espacement (48), et l'autre côté dudit élément central (40) est fixé audit élément flexible (30') par un autre ensemble dudit deuxième groupe de fixations (25) traversant un autre ensemble de pièces d'espacement (48'), et ledit élément flexible (30') est fixé à ladite bride (22) par un autre ensemble dudit premier groupe de fixations (24).

2. Accouplement flexible métallique suivant la revendication 1, caractérisé en ce que lesdits premier et deuxième manchons d'accouplement (12, 14) sont réversibles pour le montage de ces manchons sur les arbres avec des parties de corps (16, 18) qui font saillie latéralement dans un sens ou dans l'autre, afin de modifier la distance entre lesdites parties de corps.

3. Accouplement flexible métallique suivant les revendications 1 et 2, caractérisé en ce que les dits éléments flexibles (30) comprennent une pluralité de disques métalliques minces (43), comportant chacun une ouverture centrale traversante de diamètre plus grand que celui desdites parties de corps (165, 18), et des éléments d'assemblage (44, 46) retenant lesdits disques en relation côte-à-côte.

4. Accouplement flexible métallique suivant la revendication 3, caractérisé en ce que lesdits disques (43) comportent en outre une pluralité de trous traversants équidistants, qui correspondent auxdits trous desdites brides (20, 22), et lesdits disques présentent des bords extérieurs concaves (C, D) entre lesdits trous espacés.

5. Accouplement flexible métallique suivant la revendication 1, caractérisé en ce que lesdites pièces d'espacement (48) sont sous la forme de manchons cylindriques pour retenir ledit élément central (40) en relation espacée par rapport auxdits manchons d'accouplement (12, 14).

6. Accouplement flexible métallique suivant la revendication 5, caractérisé en ce que lesdits manchons d'accouplement (12, 14) sont réversibles pour le montage desdits manchons d'accouplement sur les arbres avec des parties de corps (16, 18) qui font saillie latéralement dans un sens ou dans l'autre, pour modifier la distance entre lesdites parties de corps.

Fig. 1

Fig. 2

# Fig.3

# Fig.4

EP 0 173 814 B1

Fig.5

Fig.6

Fig.7

Fig.8

3